Europäisches Patentamt

European Patent Office

Office européen des brevets

(19)

(11) Publication number: 0 118 271

A1

## (12) EUROPEAN PATENT APPLICATION

(21) Application number: 84301257.6

(22) Date of filing: 27.02.84

(51) Int. Cl.³: **H 02 K 17/28**
**H 02 K 17/30, H 02 K 3/28**

(30) Priority: 28.02.83 GB 8305501

(43) Date of publication of application:
12.09.84 Bulletin 84/37

(84) Designated Contracting States:
CH DE FR IT LI SE

(71) Applicant: NATIONAL RESEARCH DEVELOPMENT
CORPORATION
101 Newington Causeway
London SE1 6BU(GB)

(72) Inventor: Laithwaite, Eric Roberts
9 Shorecroft Aldwick
Bognor Regis West Sussex PO21 4AS(GB)

(72) Inventor: Williamson, Stephen
10 Barbara's Meadow Tilehurst
Reading Berkshire RG3 6YF(GB)

(74) Representative: Chandler, Derek Richard
Patent Department National Research Development
Corporation 101 Newington Causeway
London SE1 6BU(GB)

(54) Electrical machines.

(57) An alternating current electrical machine including a first part and a second relatively movable part and an airgap therebetween, one machine part including windings energisable in operation to produce a magnetic flux to move along said gap and link said parts, and means to energise the windings from a supply of alternating electric power, the windings having field pole turns to produce from applied power at one alternation magnetic flux fields at two alternations and the same movement direction, at least one of the alternations being a harmonic of the two-pole field for the applied alternating power and the field of lower alternations being of lesser strength and better airgap power factor than the other field.

FIG.2a

EP 0 118 271 A1

- 1 -

123163

ELECTRICAL MACHINES

This invention relates to electrical machines and more particularly to cage-rotor induction machines.

Electrical machines used on alternating current make inefficient use of electricity and cause extra burdens on the electricity supply if they demand a significant proportion of reactive power.

It is an object of the invention to provide an electrical machine requiring a reduced proportion of reactive power.

According to the invention there is provided an alternating current electrical machine including a first part and a second relatively movable part and an airgap therebetween, one machine part including windings energisable in operation to produce a magnetic flux to move along said gap and link said parts, and means to energise the windings from a supply of alternating electric power, the windings having field pole turns to produce from applied power at one alternation magnetic flux fields at two alternations and the same movement direction, at least one of the alternations being a harmonic of the two-pole field for the applied alternating power and the field of lower alternation being of lesser strength and better airgap power factor than the other field.

According to a particular aspect of the the invention there is provided an induction machine arrangement of a stator having a winding, a rotor supported for movement with respect to the stator and an airgap between the stator and the rotor to permit electromagnetic flux to link the stator and rotor, in which machine the stator winding provides a first set of poles and a second set of poles, the stator winding having terminals for the connection of an alternationg current electrical supply of a particular frequency to energise the winding to produce, in operation, electromagnetic fields of said pole sets moving along the airgap, and in which winding the second set of poles has a lower pole number, the additional pole number, than the first set of poles so that, in operation, an additional field from the second pole set moves along the airgap faster than a stronger pincipal field from the first pole set, the arrangement being such that the faster-moving field co-operates with the rotor at a higher power factor than the principal field to improve the overall power factor of the arrangement.

Embodiments of the invention will now be described with reference to the accompanying drawings in which:-

Figure 1 is a graph of power factor (cos $\emptyset$) and efficiency ($\eta$) against power conversion by two different fields,

Figure 2 shows Argand diagrams for various airgap fields,

Figures 3, 4 and 5 show connection diagrams for machine windings according to the invention, and

Figure 6 shows equations relating to the behaviour of an electrical machine.

Recent proposals, such as UK Patent 2064229 and UK published Patent Application 2084821, have related to altering the behaviour of cage-rotor induction machines, which may be motors or generators, by means of special windings which form one or more parts of the stator. These proposals include the recovery of energy from the rotor of a motor by means of part of the stator winding, usually a part having a shorter pole pitch than the rest of the winding.

Analysis of the behaviour of an induction machine with a general winding configuration has led to a different approach to the alteration of the behaviour of such a machine which does not depend on the feature of a shorter pole-pitch but on the presence of a particular type of airgap field and a larger pole-pitch.

Consider an 8-pole machine with $G_8 = 50$, $\omega T_8 = 2$, both constants being measured at the rated slip of 3%. The rotor efficiency of such a machine is 97% and the rotor power factor is 0.808.

Quantity "G" is the Goodness Factor of the machine and quantity "$\omega T$" is the rotor leakage time constant, the ratio of the rotor leakage reactance to the rotor resistance. The subscript "8" indicates that the 8-pole value of the quantity is referred to.

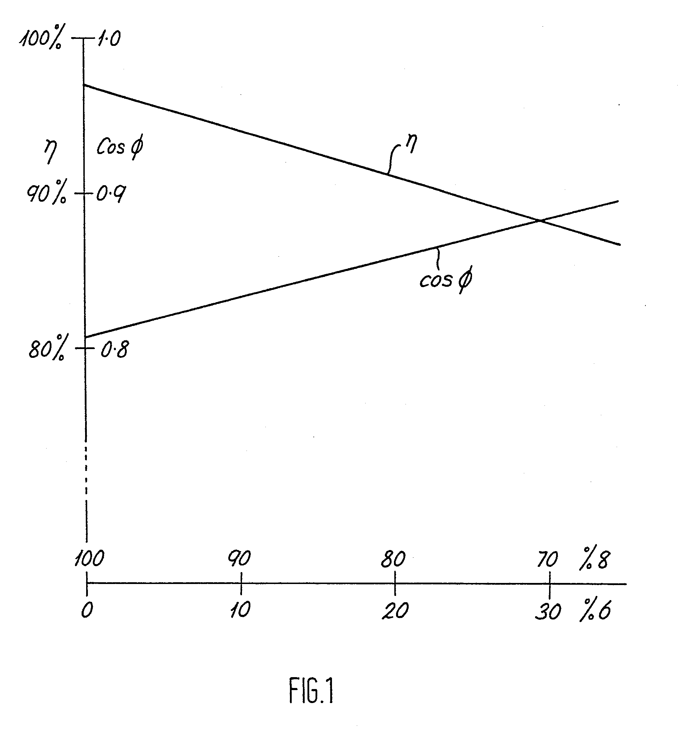

The machine is now provided with an additional, 6-pole, field by which a proportion of the power is converted. At the rated speed on a 50 Hz supply the rotor slip with respect to this field is 27%. The rotor currents for the 6-pole field will be of a

- 3 -

higher frequency than for the 8-pole field. The rotor resistance will therefore be greater for the 6-pole than for the 8-pole, whilst the rotor leakage reactance will be smaller, because of skin effect. It will be assumed that, typically, $G_6 = 60$ and $\omega T_6 = 0.5$. The power factor and efficiency for the 6-pole field are therefore 0.981 and 73% respectively. Figure 1 illustrates the variation of total airgap power factor cos $\emptyset$ and rotor efficiency $\eta$ at rated speed, with the increasing proportion of power ($\%_6$) converted by the 6-pole field. It should be pointed out that the improvement in power factor is not achieved solely by an increase in real input power. With 30% of the output power being converted by the 6-pole field, for example, the input VARs per kW output power fall to 608, from the 752 required at the same output power in a 'pure' 8-pole machine.

The above embodiment is a specific example of the invention. The manner in which the invention achieves the improved performance is now considered in more detail.

An induction motor is designed to operate at a speed which corresponds to a small slip value as defined for a particular pole number. The bulk of electromechanical energy conversion in a machine will take place on this pole number, which will be referred to as the principal pole number. It will also be assumed that the stator winding and leakage reactances are small enough to be negligible at rated speed. The input power factor measured at the terminals may therefore be equated to the airgap power factor, at rated speed.

The pole number is based on a "fundamental" pole pitch corresponding to a two-pole wave of the rotating field. "Harmonics" of the fundamental pole-pitch correspond to the rotating field waves for higher pole numbers.

All the fields that are usable are either the fundamental or a harmonic thereof and are referred to as harmonic fields.

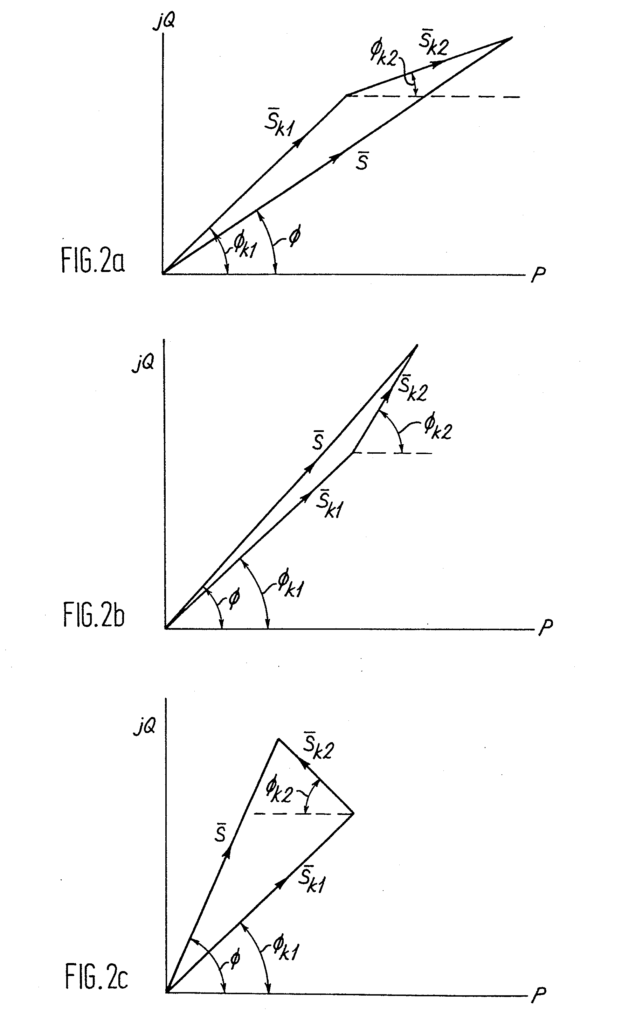

Considering the machine in more detail the complex input power on the principal pole number may be denoted $P_{k1} + jQ_{k1}$, and represented by a vector $\bar{S}_{k1}$ on an Argand diagram, as shown in Figures 2(a) to 2(c). In the absence of any other harmonic fields in the airgap, the input power factor is cos $\phi_{k1}$. If, now, another harmonic field of a second pole number $(\bar{S}_{k2})$ is produced by the stator winding and supply configuration then three possibilities exist, as represented by the Figures 2(a) to 2(c). In all three of these diagrams the complex input power flowing in on the second pole number $(\bar{S}_{k2})$ is shown as being added to that flowing in on the principal pole number, to give the total complex power input $\bar{S}$. In all three the VARs flowing in on the second pole number are positive.

The polarity of VARs in the machine refers to the VAR input to the airgap of the machine. It can be shown that the VAR input to the airgap must always be positive, on the assumption that the machine can be represented by a stator and rotor of a pair of smooth concentric cylinders of infinitely permeable iron with stator windings and rotor cage lying on the appropriate surfaces. The term windings denotes any distinct series-connected set of coils. On the same assumption it can be shown that the stator will always consume positive VARs only. As a result the complex power input to any induction machine, represented as above, will always have a positive imaginary component, when excited by a sinusoidal source.

It is possible to analyse the behaviour of the machine in a generalised manner in terms of the fundamental and harmonics of the rotating magnetomotive force in the machine. The effects of the coupling impedance between the mth and nth windings of a stator, between the bars of the rotor cage through the airgap field from the mth winding current, between the nth winding and the rotor current harmonic of wave number $\underline{k}$, together with the e.m.f induced in a rotor bar are together applied to an expression for the total complex power imput, $\bar{S}$, to the machine. This expression also requires the voltage balance equation for the nth stator winding.

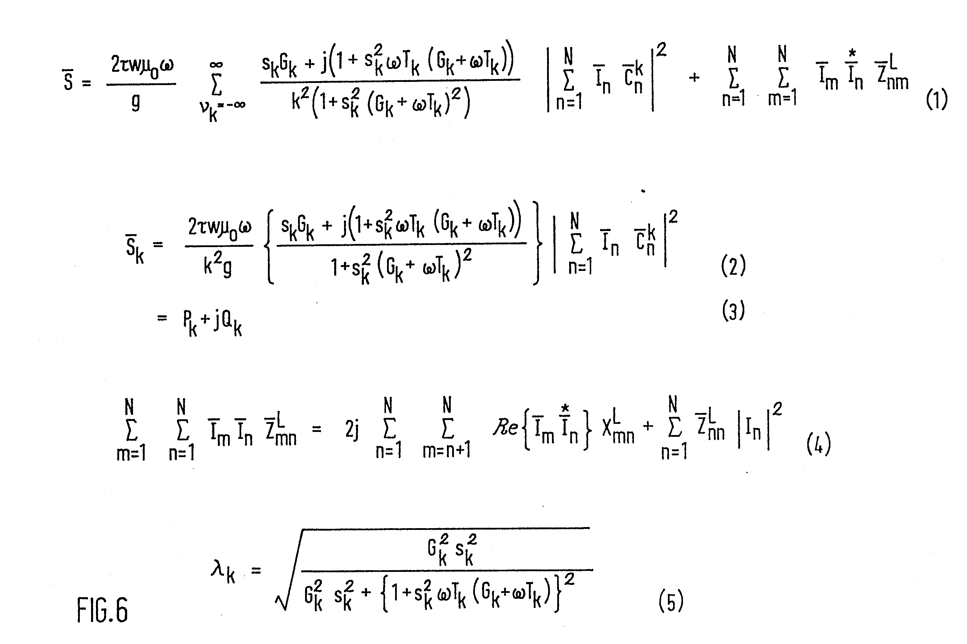

Equation 1 in Figure 6 is the complex power input, the first term is the power fed into the air gap from the stator. The second term is the complex power consumed in the stator.

In Equation 1, $\underline{\tau}$ is the fundamental pole pitch, $\underline{w}$ is the axial length of the machine. Subscript $\underline{k}$ identifies the wave number of the harmonic being considered. $G_k$ is the Goodness Factor, $\omega T_k$ the rotor leakage time constant, $s_k$ the rotor slip, $z^L$ is a coupling due to non-airgap flux.

Equation 2 in Figure 6 is one harmonic element of the complex power fed into the airgap from the stator and can be represented as in-phase and quadrature components P and Q respectively (Equation 3).

Equation 4 is derived from the second term of Equation 1 and is the power consumed in the stator.

Equations 1 and 4 have positive terms which show that the VAR input to the airgap and the VAR consumption in the stator are positive.

The airgap power factor for a harmonic can now be determined from Equation 2, with reference to Equation 3 and is seen at Equation 5.

Turning again to Figures 2(a) and (b) the second pole number draws positive real power from the supply. In Figure 2(a) the nett result is to improve the overall power factor whereas in Figure 2(b) it results in a deterioration. Comparison between these two figures reveals that the difference is that the power factor for the second pole number is greater than that for the principal pole number in Figure 2(a), whereas in Figure 2(b) the reverse is true. Figure 2(c) shows the situation that arises when the real input power for the second pole number is negative. Clearly the presence of the second pole number and its vector $\overline{S}_{k2}$ now make the input power factor deteriorate for all values of $\phi_{k2}$.

From the above examination of the operation of the machine it is possible to identify two conditions which must be met if the presence of another harmonic field is to improve the input power factor produced on the principal pole number.

(i) The real power input on the second pole number must be positive, i.e. it must not be generating power.

(ii) The airgap power factor for the second pole number must be greater than that of the principal pole number.

The airgap fields produced by the stator are backwards- or forwards-rotating. For backwards-rotating fields the rotor slip is greater than 1. At rated speed real power flows in at the machine terminals, so that condition (i) is seen to be met. The electrical input power, however, is insufficient to supply the rotor joule losses, so that power is also absorbed from the mechanical load. This is the well-known 'plugging' condition. A backwards-rotating harmonic therefore both increases the input power and, by reducing the net forward torque, reduces the output power, having a doubly-adverse effect on efficiency. Furthermore, since peak torque is developed on the principal pole number at a slip corresponding to $\omega Ts \simeq 1$, considerations of rotor efficiency dictate that typical design values of $\omega T$ are in the region of 2 or greater. Calculations based on Equation 5 suggest that the power factor at the airgap for any plugging harmonic is most likely to be lower than that for the principal pole number. It is therefore seen that, although condition (i) is obeyed, it is unlikely that condition (ii) will be for any practical design. This, coupled with the compounded reduction in efficiency, indicates that the introduction of a backwards-rotating harmonic does not represent a practical means of improving power factor.

Forwards-rotating fields may be further categorised as super-harmonic or sub-harmonic. Super-harmonic fields have a pole number greater than that of the principal field. At rated speed the rotor is rotating super-synchronously with respect to the super-harmonic fields, which consequently generate real power. The presence of super-harmonics is seen to violate condition (i), above, and will result in a deterioration in input power factor. Sub-harmonic fields have a pole number which is less than that of the principal field. Such fields see the rotor rotating at a slip between 0 and 1 at rated operating speed. The input power to a sub-harmonic field is positive, so that condition (i) is obeyed. Furthermore, a proportion of the power input to a sub-harmonic field is contributed towards the mechanical output power, albeit at a lower efficiency than for the principal pole number. The presence of a forwards-rotating sub-harmonic field is therefore seen to obey condition (i) without incurring an efficiency penalty that is as severe as that obtained with a backwards-rotating field.

Power factor improvement requires condition (ii) above to be obeyed in addition to condition (i). The extent to which power factor can be improved and at what cost in terms of efficiency will be a matter of detailed design. It is possible to give by examples an indication of some possible arrangements.

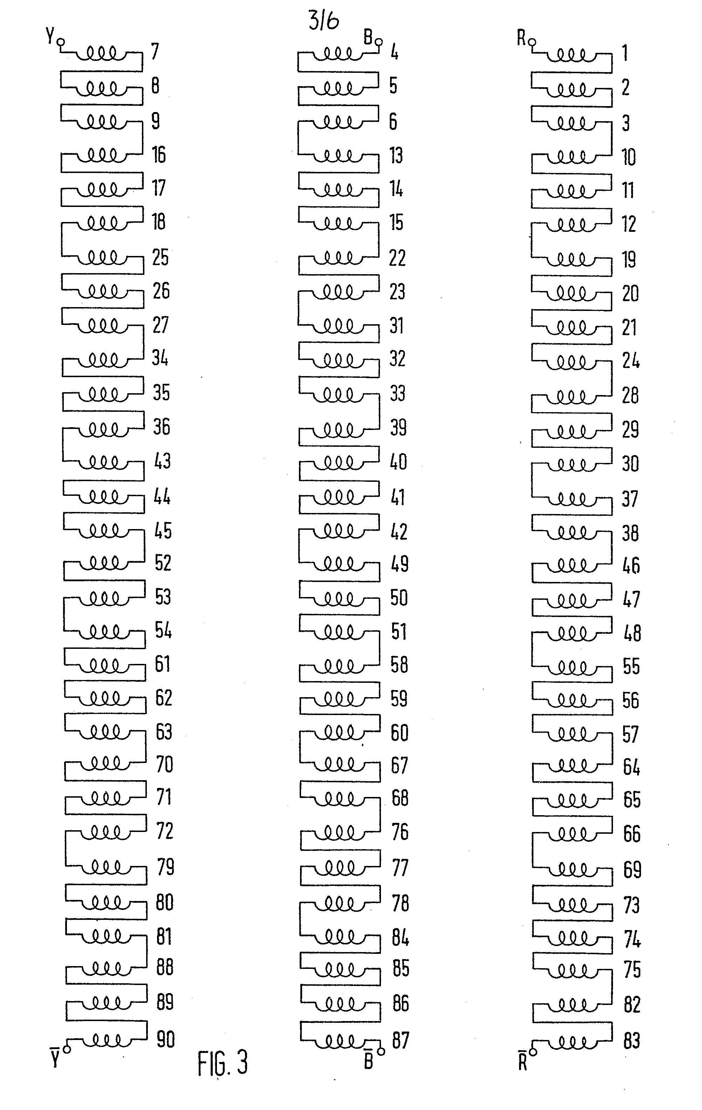

Figure 3 shows one possible connection diagram for a three-phase winding in 90 slots. This will produce a balanced three-phase 10-pole machine with an 8-pole sub-harmonic. Other sub-harmonic fields are also produced but care in design can reduce any ill-effect. Certain super-harmonics are also present and can be attenuated by known techniques.

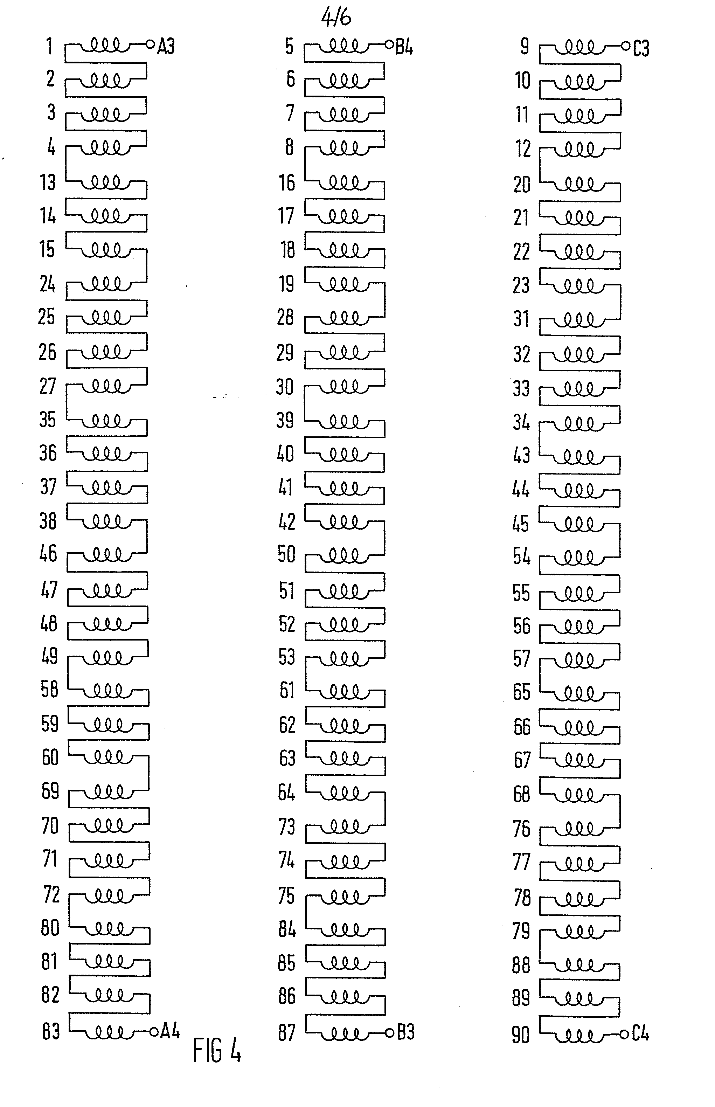

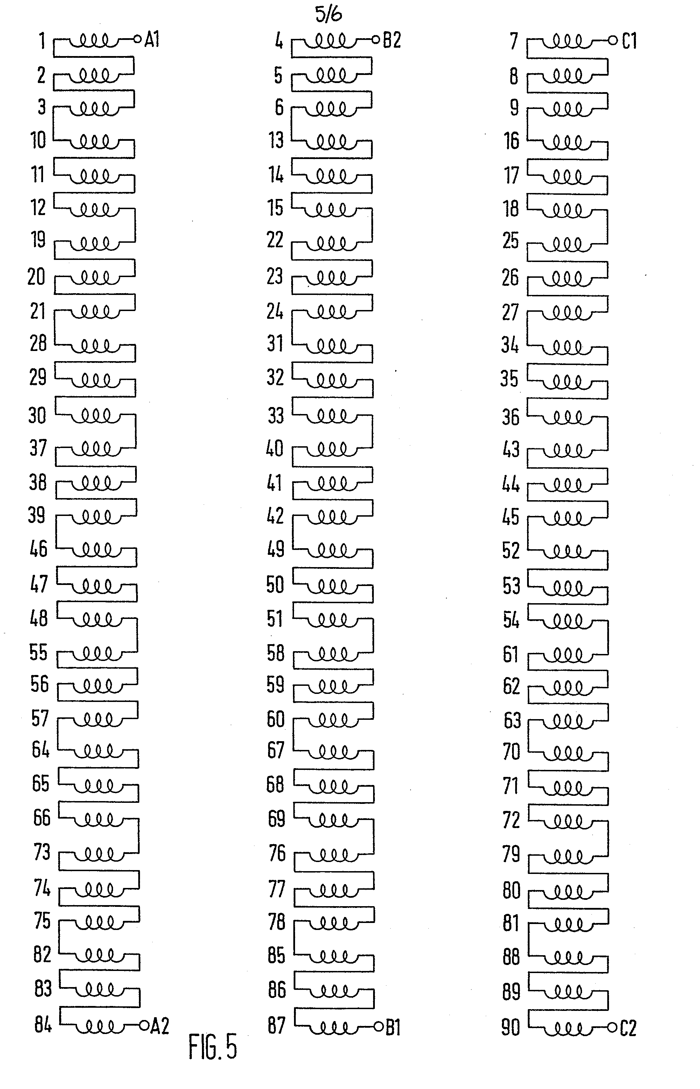

A relatively straightforward means of producing a second pole number is to simply add an extra winding to the 10-pole machine. For instance, an 8-pole sub-harmonic field would be produced by adding an 8-pole winding. This winding would lie in the same slots as the main propulsion winding, at the top of the slots to give it a lower slot leakage. Series-connection would probably be necessary, to avoid magnetic short-circuits, so the extra winding would be wound from the same gauge wire as the main winding but have fewer turns. As an example of this idea, Figures 4 and 5 are connection diagrams for standard 8-pole and 10-pole windings for a 90-slot stator. A possible arrangement would involve connecting A2 to A3, B2 to B3, and C2 to C3. The machine would then be excited via A1, B1 and C1, with A4, B4 and C4 connected to form a star point.

The exact form of construction for a machine for a particular purpose will be apparent to those skilled in the art from the above examples. These examples do not restrict the form of the machine to the values shown. Machines with 6, 8 or 10 poles appear to be very suitable but machines with other numbers of poles and rotor and stator forms are usable. It may also be appropriate to add a further sub-harmonic field with a further pole number. An arrangement of 2 and 4 poles can be useful in improving power factor despite the higher frequency (circa 25 HZ).

The techniques described above show that machines of conventional frame form and having windings based on conventional forms can be constructed have improved power factor although still absorbing VARs from the supply.

CLAIMS

1. An alternating current electrical machine including a first part and a second relatively movable part and an airgap therebetween, one machine part including windings energisable in operation to produce a magnetic flux to move along said gap and link said parts, and means to energise the windings from a supply of alternating electric power, the windings having field pole turns to produce from applied power at one alternation magnetic flux fields at two alternations and the same movement direction, at least one of the alternations being a harmonic of the two-pole field for the applied alternating power and the field of lower alternation being of lesser strength and better airgap power factor than the other field.

2. A machine according to Claim 1 in which the lower field alternation is the next harmonic of the two-pole field below the other, higher, field alternation.

3. A machine according to Claim 1 including means to produce at least three different alternations of magnetic flux fields.

4. A machine according to Claim 1 which is a cage rotor induction motor with the field pole turns for the lower alternation in the same slots in the stator as a distinct winding part.

5. A machine according to Claim 4 in which the winding-part for the lower alternation is in series with the winding for the other alternation but of fewer turns.

6. A machine according to Claim 1 which is a cage rotor induction motor with the field pole turns for the lower alternation in the tops of the slots in the stator as a distinct winding part.

7. A machine according to Claim 1 in which the field pole turns are arranged to produce together a harmonic and a lower harmonic of the two-pole field.

8. A machine according to Claim 1 in which the lower alternation field is a 6-pole or an 8-pole field.

9. An induction machine arrangement of a stator having a winding, a rotor supported for movement with respect to the stator and an airgap between the stator and the rotor to permit electromagnetic flux to link the stator and rotor, in which machine the stator winding provides a first set of poles and a second set of poles, the stator winding having terminals for the connection of an alternationg current electrical supply of a particular frequency to energise the winding to produce, in operation, electromagnteic fields of said pole sets moving along the airgap, and in which winding the second set of poles has a lower pole number, the additional pole number, than the first set of poles so that, in operation, an additional field from the second pole set moves along the airgap faster than a stronger pincipal field from the first pole set, the arrangement being such that the faster-moving field co-operates with the rotor at a higher power factor than the principal field to improve the overall power factor of the arrangement.

38B

FIG.1

FIG.2a

FIG.2b

FIG.2c

0118271

3/6

FIG. 3

4/6

FIG 4

0118271

FIG.5

$$\overline{S} = \frac{2\tau w \mu_0 \omega}{g} \sum_{\substack{\infty \\ \nu_k = -\infty}} \frac{s_k G_k + j\left(1 + s_k^2 \omega T_k \left(G_k + \omega T_k\right)\right)}{k^2 \left(1 + s_k^2 \left(G_k + \omega T_k\right)^2\right)} \left| \sum_{n=1}^{N} \overline{I}_n \ \overline{C}_n^k \right|^2 + \sum_{n=1}^{N} \sum_{m=1}^{N} \overline{I}_m \ \overset{*}{\overline{I}}_n \ \overline{Z}_{nm}^L \qquad (1)$$

$$\overline{S}_k = \frac{2\tau w \mu_0 \omega}{k^2 g} \left\{ \frac{s_k G_k + j\left(1 + s_k^2 \omega T_k \left(G_k + \omega T_k\right)\right)}{1 + s_k^2 \left(G_k + \omega T_k\right)^2} \right\} \left| \sum_{n=1}^{N} \overline{I}_n \ \overline{C}_n^k \right|^2 \qquad (2)$$

$$= P_k + j Q_k \qquad (3)$$

$$\sum_{m=1}^{N} \sum_{n=1}^{N} \overline{I}_m \ \overline{I}_n \ \overline{Z}_{mn}^L = 2j \sum_{n=1}^{N} \sum_{m=n+1}^{N} \mathcal{R}e\left\{\overline{I}_m \ \overset{*}{\overline{I}}_n\right\} X_{mn}^L + \sum_{n=1}^{N} \overline{Z}_{nn}^L \left| I_n \right|^2 \qquad (4)$$

$$\lambda_k = \sqrt{\frac{G_k^2 \ s_k^2}{G_k^2 \ s_k^2 + \left\{1 + s_k^2 \omega T_k \left(G_k + \omega T_k\right)\right\}^2}} \qquad (5)$$

FIG.6

0118271

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 138 645 (INVENTIO)<br><br>* Page 2, lines 36-42, 89-127; page 3, lines 54-61; figures 1,2 * | 1,2,4, 5,7,9 | H 02 K 17/28<br>H 02 K 17/30<br>H 02 K 3/28 |
| A | BE-A- 385 222 (BARTHE)<br>* Page 3, lines 21-30; figure 4 * | 1 | |
| A | FR-A-1 209 691 (NATIONAL RESEARCH DEVELOPMENT CORP.)<br>* Page 9, right-hand column, lines 10-18; page 10 * | 1,7,9 | |
| A | IEEE TRANSACTIONS ON POWER APPARATUS AND SYSTEMS, vol. PAS-80, no. 6, July/August 1970, pages 1321-1333, New York, USA M.R. KRISHNAMURTHY et al.: "Speed-changing two-phase induction motors, Part I: Pole amplitude modulation techniques"<br>* Page 1323, tables I,III; figures 14,15 * | 1,3,7,9 | |
| A | CH-A- 390 381 (KONCAR)<br>* Page 1, lines 52-66; page 2, lines 30-32; figure 6 * | 6 | |

**TECHNICAL FIELDS SEARCHED (Int. Cl. ³)**

H 02 K

The present search report has been drawn up for all claims

| Place of search | Date of completion of the search | Examiner |
|---|---|---|
| THE HAGUE | 05-06-1984 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82